Europäisches Patentamt

European Patent Office

Office européen des brevets

(11) Publication number: **0 151 481**
**B1**

(12) EUROPEAN PATENT SPECIFICATION

(45) Date of publication of patent specification: **18.04.90**

(51) Int. Cl.⁵: **B 01 D 33/333**

(21) Application number: **85101177.5**

(22) Date of filing: **05.02.85**

(54) Horizontal tray belt filter.

(30) Priority: **07.02.84 DE 3404110**

(43) Date of publication of application:
**14.08.85 Bulletin 85/33**

(45) Publication of the grant of the patent:
**18.04.90 Bulletin 90/16**

(84) Designated Contracting States:
**AT BE CH DE FR GB IT LI LU NL SE**

(56) References cited:
**GB-A- 570 501**
**GB-A-2 012 179**
**US-A-1 862 050**
**US-A-2 688 406**
**US-A-3 347 378**

(73) Proprietor: **DORR-OLIVER INCORPORATED**
**Corporate Headquarters 77, Havemeyer Lane**
**P.O. Box 9312**
**Stamford Connecticut 06904-9312 (US)**

(72) Inventor: **Pietzsch, Kurt**
**Memelstrasse 11**
**Wiesbaden-Sonnenberg (DE)**
Inventor: **Bonnvay, Laszlo**
**Jonkerlaan 26**
**NL-2242 GE Wassenaar (NL)**

(74) Representative: **Weber, Dieter, Dr. et al**
**Willrath Weber und Seiffert Postfach 6145**
**Gustav-Freytag-Strasse 25**
**D-6200 Wiesbaden 1 (DE)**

Courier Press, Leamington Spa, England.

## Description

This invention is related to a vacuum filter for the separation of solids from liquids in accordance with the preamble of Claim 1.

Vacuum filters with horizontal filter areas are known in many versions. The horizontal arrangement of the filter area offers an excellent filtration for many applications as the forming of the cake is supported by gravitation and the cake washing can be carried out more efficiently.

There are horizontal filters with a rotating disc or pan as a filter area, which can be divided in separately tilted pans for the cake discharge.

There are, further, machines known as reciprocating pan filters or intermittent belt filters, which, however, have the disadvantage of not being able to carry out a real continuous filtration. When the filter cloth is being moved against the pan or vice versa, the vacuum is interrupted.

The intermittent filtration resulting therefrom, limits the field of applications, especially if fast filtering material has to be filtered. Furthermore, the washing of the filtercake is less efficient, und also a complicated and difficult control system would be necessary for the operation of the filter.

In US—A—1 862 050 (Donaldson) a tray belt filter is disclosed, in which the trays are rotating on the principle of a band and a filter cloth is caulked into each single tray with a closed rim around it.

On this known tray filter which is moving horizontally, a number of separate trays are arranged like a strip or band and each tray has its own connection to the lower filtrate channel, whereby a gliding seal is foreseen between the trays and the vacuum channel. This type of filter has the disadvantage of being of a heavy mechanical design, the cake cannot be discharged completely, and the filter cloth washing is less efficient.

From US—A—2 688 406 a vacuum filter is known of the type as stated above. However, because of the connection of the trays with a belt according to this document by means of bolts and due to the stationary suction box these belts cannot be easily changed due to abrasion after a certain time or removed for cleaning purposes. In such cases it is necessary to detach the single bolts and also to remove the trays because there is only little space between the trays and the stationary suction box which makes it difficult to assemble a new belt or reassemble the belt after cleaning.

Accordingly, it is the object of the present invention to improve the vacuum filter in such a way that a simple maintenance and repair is possible.

This object is achieved by a vacuum filter which is characterized in that on each side of the row of holes in the endless belt there is a respective wear belt removably installed under the elastic endless belt on the upper surface of the vacuum channel and that the vacuum channel is fastened swingably at the frame.

It is already known per se from another context, to put an endless filter cloth over the filtration zone of vacuum filters.

They are, that is to say, horizontal vacuum filters which work on the principle of the conveyor belt. These filters can be rubber belt filters, where a heavy endless rubber belt, for example, with a width of 1 m up to 6 m, supports an endless filter cloth. This rubber belt is designed in such a way, that it forms a gliding sealing with a vacuum filtrate channel in the filtration zone. These rubber belt filters have the disadvantage of being very heavy, difficult to handle and to assemble, and are extremely expensive.

When the rubber belt must be changed due to abrasion after a certain time, the machine must be completely disassembled. Moreover, the applications for which this kind of rubber belt filters can be used, are limited, as there are suspensions which must not be in contact with the rubber.

It is possible, however, with these known rubber belt filters, that the filter cloth can be led in form of a belt onto the filter area at the inlet and outlet, so that also outside of the filtration zone washing devices are available for the routine cleaning of the filter cloth. However, the disadvantages of the rubber belt filters known, like difficult assembly, heavy weight of the massive rubber belt, and the considerable investment costs, are of such kind, that the vacuum filters with the rotating trays are very much preferred. However, for these filters the usage of an endless filter cloth is unknown, because it had not been suitable so far.

By applying the measures according to the invention, the continuous filtration is achieved by more suitable means. Thereby, one has neither the disadvantages of the rubber belt as described above, nor the ones of the single pans being like a conveyor, a method, where the filter cloth had been caulked into each single pan. The new filter is applicable in all fields of filtration, and it is available at all sizes being required on the market at the present time. The trays supporting the endless filter cloth are open on two sides, are fringeless respectively, and in this way form an assembled tray in horizontal position, or one single large filter area. Each tray has its own connection with the vacuum channel underneath and is assembled in such a way, that tray and vacuum channel form together a gliding sealing.

According to the invention, it is further advantageous, if there is a wire fastened on one side and an elastic sealing tape on the other side for sealing the adjoining fringeless edges of the trays. With these, sealing elements have been used which have a long lasting duration and a good compatibility with the liquids and solids normally treated.

Another advantage of the invention is the wear belts being movable arranged in the filtration zone underneath the elastic endless belt and over the gliding surface of the stationary vacuum channel on both sides of the row of holes in the endless belt. These belts can be easily exchanged, replaced or removed for cleaning purposes. The wear belts and also the elastic endless belts are considerably smaller and of less weight than the rubber belt mentioned in the initial description, which form the filter area. Width, thickness, and assembly of the elastic endless belt according to the invention represent only a fraction of this massive and heavy rubber belt of the filter machines known.

The vacuum channel is swingable fixed at the frame in order to facilitate cleaning the vacuum channel and elements nearby, or for exchanging the wear belts. The vacuum channel can be lowered or swung out of its operational position without taking off the filter cloth and/or the trays. Thus, the required cleaning, maintenance, or repair can be carried out easily.

It is also advantageous if—according to the invention—the filter area of each tray is being formed by a removable grid snapped in underneath a cap strip fixed at both sealing edges.

This grid is made preferably of plastic and posseses, apart from a good compatibility with the other manufactured materials, not only a sufficient stiffness, but also an adequate flexibility. This makes it possible that the front and back ends of the grid can be snapped in underneath the cap strips in the direction of transportation. The cap strips are preferably foreseen or fixed to the box like lower part of the respective tray. Thus, each repair and maintenance can be carried out quickly and easily, without risking any stoppage of the vacuum filter.

The new vacuum filter, which is called a "horizontal tray belt filter" or "travelling tray belt filter" has nearly no limitation in its applications, because the trays can be made of any material. A disassembly of the vacuum filter is not necessary, even if single trays must be maintained or repaired. The filtration with the new filter is carried out wholly continuously, the filter cake is completely discharged, and after the cake discharge the filter cloth can be washed on both sides by the washing devices which are installed preferably outside of the filtration zone.

Furthermore, there are no limitations with regards to filter sizes.

Further advantages, characteristics, and applications of the invention in question are seen from the following description showing a preferred embodiment of the invention in connection with the following drawings:

Figure 1: schematically the side view of a vacuum filter according to the invention with horizontal filter areas formed by the row of trays being arranged one after another,

Figure 2: cross-sectional view along the line II—II in Figure 1,

Figure 3: an enlarged view from Figure 2, namely cut off: the middle and right part of a tray with mounting support means and discharge, running in direction of the paper plane surface,

Figure 4: a longitudinal view shown cut off, in direction of transportation of the trays, whereby the sealing area of the two adjacent trays and the sealings are shown,

Figure 5: a cut off sectional view along line V—V in Figure 4,

Figure 6: an enlarged view of a tray fringe and

Figure 7: a sectional view along line VII—VII of Figure 6.

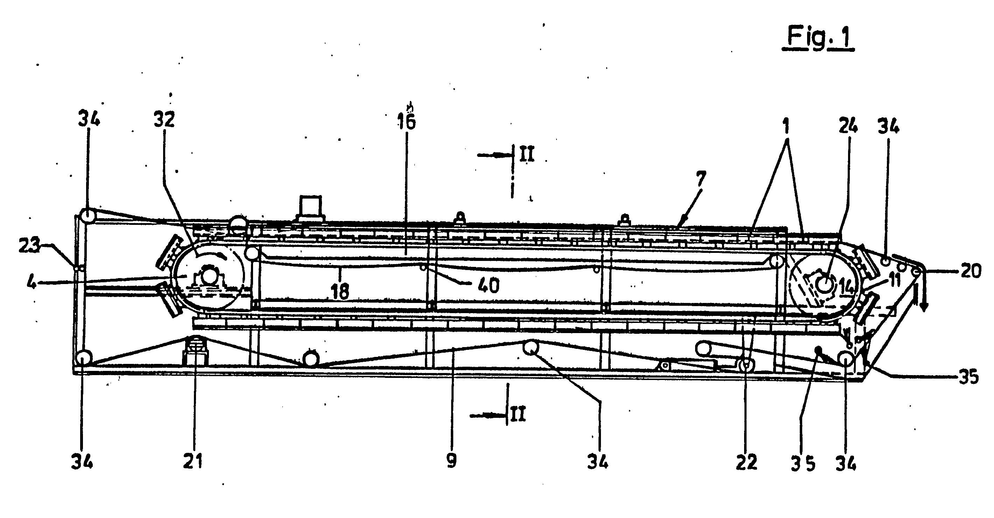

A total view is shown of the side of a vacuum filter in Figure 1. It has pulleys 4 and 14 arranged in longitudinal distances from each other, whereby only the teethed pulleys 14 are foreseen for the drive, whereas the pulleys 4 are only driven.

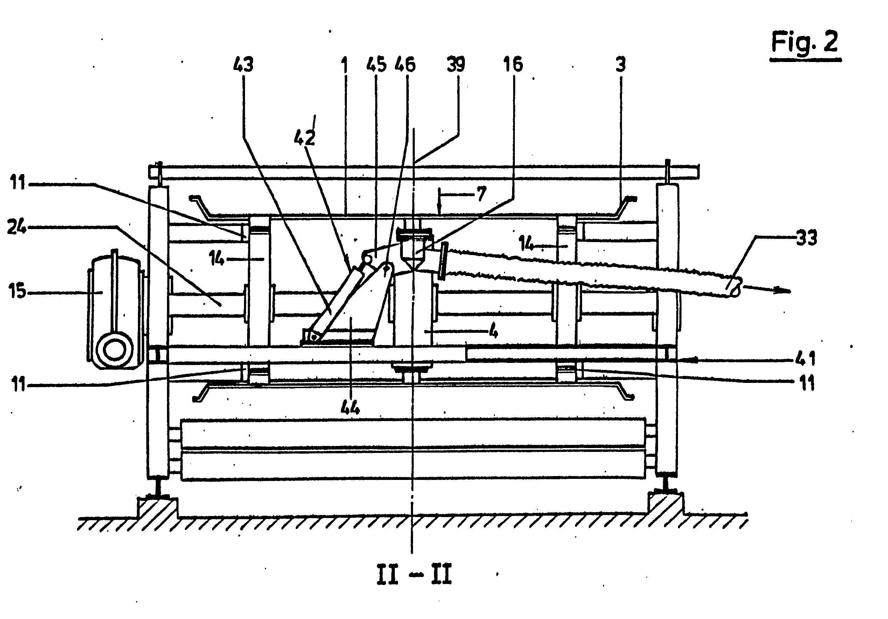

When comparing Figure 2 with Figure 1 it can be seen, that in direction of transportation of the trays 1 two teethed pulleys 14 are foreseen, also in lateral distance from each other. For the driving they are connected through the drive shaft 24 to the motor 15, in this case it is a Thyristor motor 15 with worm gear.

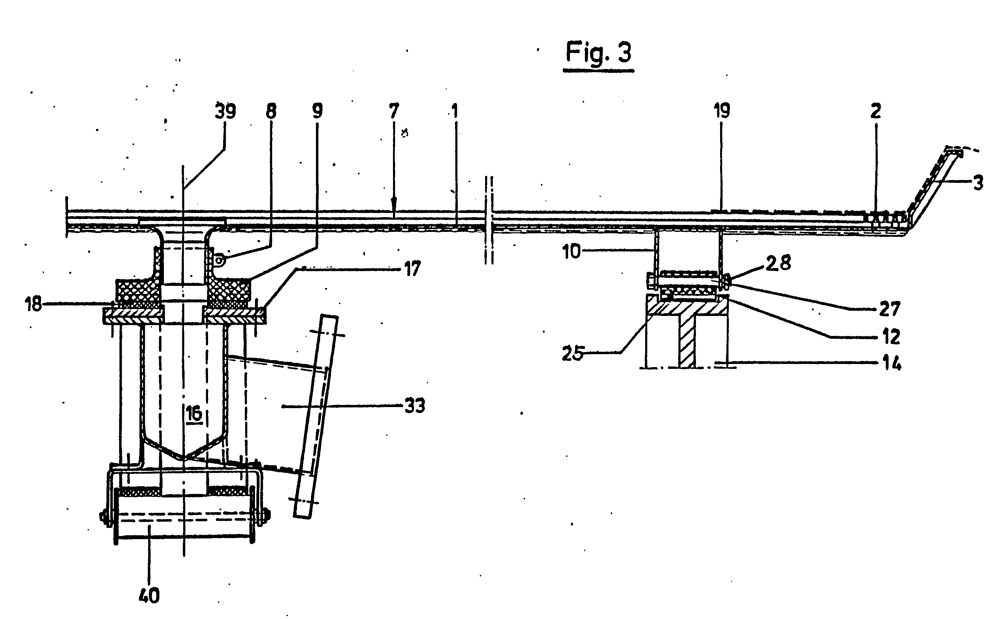

The driven pulleys 14, one of which is shown cut off in Figure 3, comb via teeth with counter teeth 25 of the caoutchouc chain 12, which is reinforced with wires 26 and is supported through bolts 27 locked by nuts 28, by a cam 10 fixed to a tray. This connection is quite clearly seen from Figure 3 on the right, whereas Figure 2 shows that for each tray 1 it is foreseen twice.

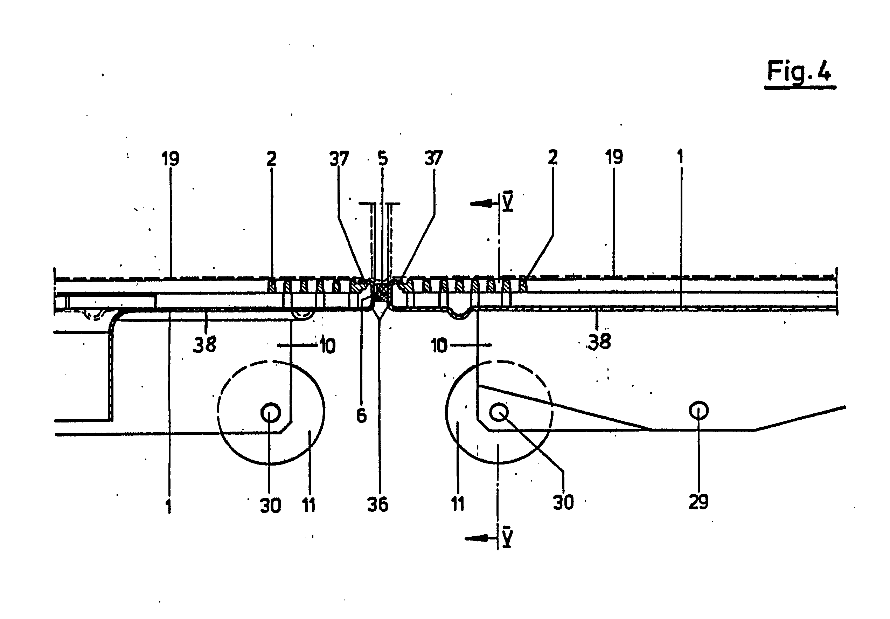

For moving of the trays 1 one can again see from Figure 4 the cam 10 which, seen from the side, shows a hole 29 located in the middle for putting in the fastening bolt 27 of the caoutchouc chain 12. On both sides, that means, in the direction of transportation of the cam in the front and back, there is a further hole 30 for fixing the shaft 31 of a guiding pulley 11.

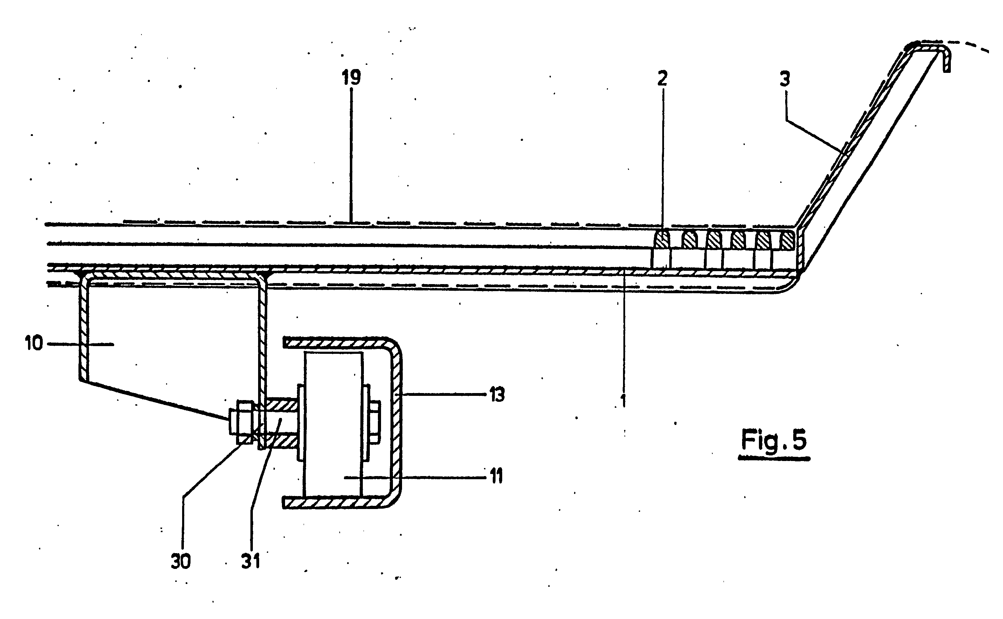

In Figure 5 this guiding pulley 11 can also be seen in moving motion and is shown while moving in a guide rail 13. For simplification, the guide rails 13, especially in Figures 1 and 2, are omitted. However, one can recognize the way the respective tray is led on both sides of its longitudinal middle through the cams 10 welded to the bottom of the tray for example, by supporting of the guiding rollers or pulleys 11 in the guide rail 13 and is conveyed between the two guiding pulleys through the caoutchouc chains 12, fixed to the cams 10.

The direction of rotation of the vacuum filter is shown in Figure 1 by the arrow 32 bent to the left. When rotating, the caoutchouc chain is moving with the endless row of the movably fixed trays 1. Thereby, the trays form a horizontal filter area, the so called deck 7, the continuous tray 7, respectively.

Like with the filters known, also here a stationary vacuum channel 16 is arranged in longitudinal direction underneath the row of trays 1 and foreseen in gliding contact with the respective bottom side of the tray, as it is shown clearly in Figure 3. Here also the filtrate outlets 33 are indicated, however, this need not any further attention here.

The band-shaped, and therewith, endless filter cloth 19 is led over various rolls 34, whereby wrinkling of the filter cloth 19 is avoided by a tracking roll 21, a guide roll 22 and a constant tensioning system 23. Number 20 is the discharge roll. With this it is only shown an especially preferred type of the discharge system for the filter cake. The endless filter belt 19 is led over the filter deck 7 over the whole surface of the grids 2 in the trays 1 and moves simultaneously with them.

It is understood, that the filtration zone is in the area over the vacuum channel 16, laterally broadened in the row of the trays 1, respectively, in Figures 1 and 2 on the top. The washing devices, generally marked with 35, are shown as water spray nozzles in Figure 1 on the right hand side below. They are outside of the filtration zone.

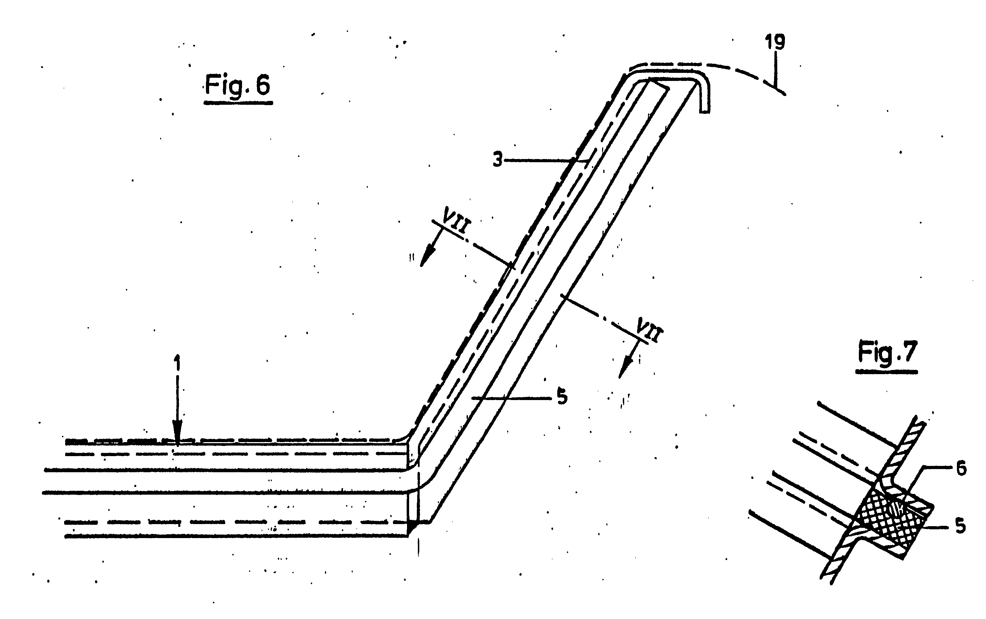

The design of the tray 1 as described here, differs mainly from others in the way, that no rim is foreseen at the front and back side in the course of direction of the respective tray 1. This can be clearly seen in Figure 4, from the contact point, where only one end edge 36 abuts the other whereby in the adjoining condition, shown in Figure 1 on the top and in Figure 4, a sealing is arranged therebetween in the form of a wire 6 on the one hand and an elastic sealing strip 5 on the other hand. Also in Figures 6 and 7 the sealing arrangement can be seen.

In Figures 2, 3, 5 and 6 one can see direction of transportation the respective side rim as a dam 3. By the fringeless design of the tray 1 in the course of direction in the front and back one uniform filter area 7 is formed over the filtration zone by means of adjoining grids 2, whereby the grids form the supporting area for the filter cloth 19. The design of the grids with the feet showing towards the bottom is seen especially clearly in Figure 4, whereby each grid 2 can be snapped in underneath a cap strip 37 and, therewith, it is easily to be taken off, but can be fastened at the same time. The cap strip 37 is arranged at and integrally moulded to, respectively, each of the front and back end rim 36 of the lower box like part 38 of each tray 1. This front or back rim 36 can also be called sealing rim.

From Figure 3 one can see that each tray 1 has a filtrate outlet nozzle. This is connected with a caoutchouc belt 9 by a clamp 8 in the region of the longitudinal axis 39 on the bottom of the tray 1. The caoutchouc belt is led like a rotating caoutchouc conveyor or band and is gliding over two endless wear belts 18 in parallel to each other, on the gliding surface 17 of the vacuum channel 16. This gliding surface is preferably furnished with an additional polytetrafluorethylene coating. In the lower part the wear belt 18 is going back on supporting rolls 40, which are fixed as the other parts to the frame, generally marked with 41. Inspite of the polytetrafluorethylene surface 17 the interpositioned wear belts 18 reduce considerably the wear of the caoutchouc belt 9, and it can be imagined without difficulty, that an exchange of the cheap and light weight wear belts 18 is easily possible.

For exchanging the wear belts, if desired also the rotating caoutchouc belt 9, or for cleaning purposes, especially of the vacuum channel 16, the complete unit of channel 16, wear belt 18 and—upon loosening the clamp 8 with the nozzle—the caoutchouc belt 9 can be swung out by the swinging device 42 shown in Figure 2.

The swinging device 42 consists of a hydraulic cylinder 43 fixed to a stationary metal sheet 44 and touching a swinging plate 45, in order to swing them downwards together with the vacuum channel 16 around the point of rotation 46.

The swinging device 42 can also be furnished with a counter weight and can be operated manually.

List of reference symbols
1 Tray
2 Grid
3 Dam
4 Driven pulley
5 Rubber sealing
6 Sealing wire
7 Filter area, continuous tray (deck)
8 Clamp
9 Rotating rubber belt
10 Cam
11 Guiding pulley
12 Caoutchouc chain
13 Guide rail
14 Teethed pulley
15 Motor
16 Filtrate channel
17 Teflon gliding bar
18 Wear belt
19 Endless filter cloth
20 Discharge roll
21 Tracking roll
22 Tensioning roll
23 Guiding roll
24 Drive shaft
25 Counter tooth
26 Cam reinforcement
27 Bolt
28 Nut
29 Hole
30 Hole
31 Shaft, axis
32 Direct. of rotation
33 Filtrate outlet
34 Rolls
35 Washing device
36 Sealing end edge
37 Cap strip
38 Box like lower part
39 Longitudinal axis
40 Supporting roll
41 Frame
42 Swinging device
43 Hydraulic cylinder
44 Stationary metal sheet
45 Swinging plate
46 Point of rotation

## Claims

1. Vacuum filter for the separation of solids from liquids with a support frame (41) and a conveyor (12) rotating around horizontally spaced wheels (4, 14) on which conveyor there is movably fixed an endless row of trays (1) which trays (1) are led over a stationary vacuum channel (16), wherein an endless filter cloth (19) is located on the trays (1), each tray (1) having a seal (5, 6) at the front and back viewed in the direction of travel, and wherein each tray is built at the front and back without any projecting fringe such that the row of adjoining trays (1) above the vacuum channel (16) form a common filtration zone (7) and that all trays (1) are further connected to an elastic endless belt (9) having a longitudinal row of filtrate discharge apertures and which is slidably mounted over the vacuum channel (16) and filter cloth washing devices (35) are spaced from the filtration zone in the direction of tray travel characterized in that on each side of the row of holes in the endless belt there is a respective wear belt (18) removably installed under the elastic endless belt (9) on the upper surface (17) of the vacuum channel (16) and that the vacuum channel (16) is fastened swingably in the frame (41).

2. Vacuum filter according to Claim 1, characterized in that at the adjoining fringeless edges (36) of the trays (1) at one side there is a wire (6) fixed as a sealing and at the other side there is fixed an elastic sealing tape (5).

## Patentansprüche

1. Vakuumfilter für die Abtrennung von Feststoffen aus Flüssigkeiten mit einem Stützrahmen (41) und mit einem Förderer (12), welcher um in horizontaler Richtung beabstandete Räder (4, 14) läuft, wobei auf dem Förderer eine endlose Reihe von Schalen (1) beweglich angebracht ist, wobei die Schalen (1) über einen stationären Vakuumkanal (16) hinweggeführt werden, wobei ein endloses Filtertuch (19) auf den Schalen (1) angeordnet ist, jede Schale (1) eine Dichtung an der Vorder- und Rückseite, in Bewegungsrichtung gesehen, hat, und wobei jede Schale an der Vorder- und Rückseite ohne jeglichen vorstehenden Rand hergestellt ist, so daß die Reihe der aneinander anschließenden Schalen (1) über dem Vakuumkanal (16) eine gemeinsame Filtrierzone (7) bilden und so daß alle Schalen (1) weiterhin mit einem elastischen endlosen Gurt (9) verbunden sind, welcher eine in Längsrichtung verlaufende Reihe Filtratabgabeöffnungen hat und gleitbar über dem Vakuumkanal (16) angebracht ist, und wobei Filtertuchwaschvorrichtungen (35) in Richtung der Schaltenbewegung von der Filtrierzone beabstandet sind, dadurch gekennzeichnet, daß auf jeder Seite der Reihe von Löchern in dem endlosen Gurt jeweils ein Verschleißgurt (18) abnehmbar unter dem elastischen endlosen Gurt (9) auf der oberen Oberfläche (17) des Vakuumkanals (16) angeordnet ist, und daß der Vakuumkanal (16) federnd in dem Rahmen (41) befestigt ist.

2. Vakuumfilter nach Anspruch 1, dadurch gekennzeichnet, daß an den aneinander anschließenden rahmenlosen Kanten (36) der Schalen (1) auf einer Seite ein Draht (6) als eine Dichtung und auf der anderen Seite an elasteisches Dichtband (5) befestigt ist.

## Revendications

1. Filtre sous vide pour la séparation de solides contenus dans des liquides, comportant un cadre support (41) et un conveyeur (12) qui tourne autour de roues (4, 14) espacées horizontalement, sur lequel convoyeur est fixée en vue de son déplacement une série sans fin de plateaux (1), lesquels plateaux (1) sont conduits dans un canal fixe sous vide (16), dans lequel un tissu de filtrage (19) sans fin est disposé sur les plateaux (1), chaque plateau (1) comportant un moyen d'étanchéité (5, 6) à sa partie avant et à sa partie arrière considérées dans le sens du déplacement et dans lequel chaque plateau est construit à sa partie avant et à sa partie arrière sans frange en saillie de telle sorte que la série de plateaux contigus (1) au dessus du canal sous vide (16) constitue une zone de filtration commune (7) et que tous les plateaux (1) sont de plus reliés à une bande sand fin élastique (9) comportant une série longitudinale d'ouvertures de décharge de filtrat et qui est montée en coulissement dans le canal sous vide (16) et des dispositifs de lavage (35) du tissu de filtrage sont espacés de la zone de filtration dans le sens de déplacement des plateaux caractérisé en ce que, de chaque côté de la série de trous prévus dans la bande sans fin, il existe une bande correspondante formant support (18) disposée de façon amovible sous la bande élastique sans fin (9) sur la surface supérieure (17) du canal sous vide (16) et le canal sous vide (16) est fixé dans le cadre (41) de façon à pouvoir osciller par rapport à ce dernier.

2. Filtre sous vide selon la revendication 1 caractérisé en ce que les bords dépourvus de franges voisins (36) des plateaux (1) comportent sur l'un de leurs côtés un fil (6) fixé en tant que moyen d'étanchéité et à son autre côté est fixé un ruban d'étanchéité élastique (5).

Fig.1

Fig. 2

Fig. 3

Fig.4

EP 0 151 481 B1

Fig.5

EP 0 151 481 B1

Fig. 6

Fig. 7